# EUROPÄISCHE PATENTSCHRIFT

(11) **EP 3 838 873 B1**
(45) Veröffentlichungstag und Bekanntmachung des Hinweises auf die Patenterteilung: **24.11.2021**
(21) Anmeldenummer: 19218542.9
(22) Anmeldetag: 20.12.2019
(51) Int. Cl.: C05D 3/02, C05F 17/00, C05G 3/80, C05F 3/00

(54) **HERSTELLUNGSVERFAHREN FÜR NATÜRLICHEN KOMPOST**
METHOD FOR PRODUCING NATURAL COMPOST
PROCÉDÉ DE FABRICATION DE COMPOST NATUREL

(43) Veröffentlichungstag der Anmeldung: 23.06.2021
(73) Patentinhaber: Alpers, Johann, 21717 Fredenbeck (DE); Buck-Emden, Jan, 21682 Stade (DE)
(72) Erfinder: Alpers, Johann, 21717 Fredenbeck (DE); Buck-Emden, Jan, 21682 Stade (DE)
(74) Vertreter: Hansen, Jochen

(56) Entgegenhaltungen:
- EP-A2- 0 444 392
- EP-A2- 1 174 403
- DE-U1-202016 103 536

## Beschreibung

Weltweit nimmt die Konkurrenz um landwirtschaftliche Flächen zu. Böden bilden weltweit die Grundlage für über 90 % der produzierten Nahrung. Zur Zeit stehen 2.100 m² Ackerfläche weltweit für jeden Bürger zur Verfügung, um Nahrungs- und Futtermittel sowie nachwachsende Rohstoffe zu erzeugen. Während der Bedarf an landwirtschaftlichen Produkten für eine bis 2050 auf 9 Milliarden wachsende Weltbevölkerung stetig zunimmt, gehen landwirtschaftliche Nutzflächen durch Wüstenbildung, Versalzung und Degradierung verloren. Lokal werden dabei bis zu 50 % Ertragsrückgang erwartet. Dies wird besonders die Länder der Dritten Welt treffen. Zunehmende und weitreichende Hungersnöte wären die Folge.

Der Einsatz von Mineraldünger und Pflanzenschutzmitteln zur Steigerung der Ertragskraft sowie von Kalk zur Bodenverbesserung ist heute Stand der Technik. Insbesondere die Mineraldünger und Pflanzenschutzmittel führen zu einer unerwünschten Umweltbelastung. Der Gesetzgeber verfolgt das Ziel, den Einsatz dieser Stoffe wegen der nachteiligen Auswirkung auf die Umwelt weiter zu reduzieren. Gerade auf leichteren bzw. qualitativ schlechteren Böden, die insbesondere über einen geringeren Humus-Anteil verfügen, müssen die Erträge damit zwangsläufig zurückgehen. Kalk entsäuert den Boden und hebt den pH-Wert. Die Tätigkeit der Bodenorganismen wird vom pH-Wert des Bodens und von den physikalischen Eigenschaften des Bodens beeinflusst. Damit verbessert Kalk die Bodenstruktur in der richtigen Dosierung.

Vor allem landwirtschaftliche Böden mit geringerer Bodenpunktzahl (leichte, sandige Böden mit geringem Porenvolumen) auf großen Schlägen können wenig Wasser speichern, trocknen schnell aus und ermöglichen gute Erträge nur bei intensiver Mineraldüngergabe und Einsatz chemischer Pflanzenschutzmittel. Der Boden ist quasi permanent "auf Droge" und verarmt. Solche Böden können naturgemäß wenig Wasser speichern und verfügen über ein vergleichsweise geringeres Bodenleben. Gerade bei durch den Klimawandel hervorgerufene, stetig zunehmende Starkregenereignisse werden die Nährstoffe (insbesondere Calcium, Kalium, Nitrat) ausgewaschen und stehen somit nicht mehr für das Pflanzenwachstum zur Verfügung. Stattdessen belasten sie das Grundwasser. Durch Erosion geht Humus verloren und die Bodenqualität verschlechtert sich stetig.

In Kalkwerken, die Branntkalk herstellen, wird das verwendete Kalkstein-Gestein teilweise gewaschen, um beste Qualitäten zu erzielen. Insbesondere wird dabei in kalksteinverarbeitenden Betrieben die sog. Vorabsiebung in speziellen Anlagen gewaschen und nach Korngrößen sortiert. In beiden Fällen verbleibt ein Reststoffanteil der Korngrößen < 0,1 mm. Dieser Schlamm, eine Kalk-/Tonsuspension, wird in den kalksteinverarbeitenden Betrieben mittels Kammerfilterpressen oder Absetzbecken auf einen Trockensubstanzgehalt von ca. 80 % entwässert. Der dabei entstehende Kammerfilterkuchen fällt als relativ feste Platten aus der Presse und zerfällt zu einem lockeren, klumpigen Haufwerk. Alternativ wird der Schlamm, bestehend aus einer Kalk-/Tonsuspension, in Absetzbecken geleitet, indem sich dann die Feinteilchenbestandteile am Boden absetzen. Nach einer ausreichenden Trocknungszeit ergibt sich eine lockere, klumpige Masse gleicher Zusammensetzung, wie der Kammerfilterkuchen. Nachfolgend wird auch diese aus den Absetzbecken gewonnene Masse als Kammerfilterkuchen bezeichnet, da er die gleiche stoffliche Zusammensetzung aufweist. Der Kammerfilterkuchen, der bei der Kalkstein- und/oder Dolomitsteinwäsche oder auch in der Zementindustrie anfällt, wird zur Zeit nicht gehandelt, sondern auf Halden deponiert, steht also sehr günstig zur Verfügung.

Aus der WO 2018/001396 A1 bzw. der DE 20 2016 103536 U1 ist ein Einstreumaterial für die Tierhaltung, insbesondere für Liegeboxenlaufställe, bekannt, das aus einem kalkhaltigen Bestandteil, insbesondere dem vorangehend beschriebenen Kammerfilterkuchen und einem volumenbildenden Bestandteil, beispielsweise Stroh, Holzsägespäne, etc. besteht. Bei diesem Einstreumaterial bzw. der daraus entstehenden Liegematratze für die Tierhaltung weist der kalkhaltige Bestandteil mindestens 50 Gew. %, insbesondere min. 70 Gew. % auf, wohingegen der volumenbildende Bestandteil maximal 50 Gew. %, insbesondere 20 -30 Gew. % ausmacht. Dabei soll das leicht alkalische Milieu mit einem pH-Wert von geringfügig > 8 die Keimhemmung und die Klauen- und Eutergesundheit verbessern.

Ferner ist aus der EP 1 174 403 A2 eine Kalk-Ton-Suspension zur Gülleaufbereitung bekannt, die einen Trockensubstanzgehalt von ca. 50 Gew.-% haben soll, wobei die Trockensubstanz feinkörnig vorliegt und unter anderem 25-30 Gew.-% Calciumcarbonat sowie 8-12 Gew.-% Siliciumoxid enthält. Dabei wird in dieser Schrift die Wirkung der Kalk-Ton-Suspension als Zusatz zur Rindergülle auf ihre Fließfähigkeit und pflanzenbauliche Veränderung beschrieben.

Darüber hinaus ist aus der EP 0 444 392 A2 ein Verfahren zur Herstellung von Düngemitteln oder Bodenhilfsstoffen aus mineralischen und organischen Komponenten durch Mischen von zumindest einer mineralischen Komponente, wie bspw. Kalzit, Zeolith, Algenkalk mit mindestens einer organischen Komponente, wie z. B. tierische oder pflanzliche Rückstände, Kompost, Traubentrester etc. bekannt. Dabei wird insbesondere auf die Pelletierfähigkeit der Mischung eingegangen, um ein gut riesel- und streufähiges Produkt, dass nicht verweht werden kann, anzugeben. In einem Beispiel wird eine Düngemittelkombination aus pellentiertem Hühnermist und einer Mineralstoffmischung, bestehend aus den Mineralien Zeolithe (20 %), Kalzite (50 %) und Dolomite (30 %) beschrieben.

Das Kompostieren von biologischen Bestandteilen (organischem Material) ist vom Kleingartenkompost bis zum großtechnischen Kompostierverfahren in der Abfallwirtschaft zur Verarbeitung von Küchen- und Gartenabfällen, Bioabfall und Grünschnitt allgemein bekannt. Bei der Kompostierung wird das organische Material unter Einfluss von Luftsauerstoff und von Lebewesen in einem Rotteprozess abgebaut. Dabei werden neben CO₂ auch wasserlösliche Mineralstoffe freigesetzt, wie beispielsweise Nitrate, Ammoniumsalze, Phosphate, Kalium- und Magnesiumverbindungen, die als Dünger wirken. Das organische Material wird dabei zum Teil zu Humus umgewandelt, der zusammen mit den vorgenannten Düngerwirkungen beim Ausbringen auf den Boden die Bodenfruchtbarkeit, insbesondere Durchwurzelbarkeit erhöht.

Ausgehend von diesem Stand der Technik zur Kompostierung ist es Aufgabe der Erfindung, ein Herstellungsverfahren für einen natürlichen Kompost anzugeben, mit dem die Bodenqualität für landwirtschaftlich genutzte Ackerflächen nachhaltig verbessert wird.

Gelöst wird diese Aufgabe mit einem Herstellungsverfahren für natürlichen Kompost gemäß Anspruch 1.

Das Herstellungsverfahren für natürlichen Kompost für die Bodendüngung aus biologischen Bestandteilen als Hauptbestandteil mit einem Massenanteil von 60 % bis 90 % zeichnet sich aus durch die Schritte: Vermischen des Hauptbestandteils mit Kammerfilterkuchen, wobei der Kammerfilterkuchen aus den abschlämmbaren Feinstbestandteilen bei einer Kalkstein- und/oder Dolomitsteinwäsche anfällt, nachdem diese abschlämmbaren Feinstbestandteile in einer Kammerfilterpresse oder einem Absetzbecken entwässert sind, wobei der Kammerfilterkuchen in der Trockensubstanz 10 - 70% silikatische Verbindungen enthält; und Ablagern und Verrotten lassen des frisch vermischten Kompostes für eine Rottezeit. Dabei können sich die im Kompostierungsprozess bildenden Huminsäuren und die Mikrobiologie mit den im Kammerfilterkuchen enthaltenen silikatischen Verbindungen, insbesondere Tonmineralien und/oder Zeolith verbinden.

Mit dem so hergestellten Kompost, ausgebracht auf den von der Landwirtschaft genutzten Ackerflächen, werden die Humusbildung und die Bodenlebewesen gefördert. Dies erhöht die Bodenfruchtbarkeit, wobei die sich bei der Kompostierung bildenden Huminsäuren Nährstoffe aus dem Urboden lösen und diese Nährstoffe somit Pflanzen verfügbar machen. Dabei wirken die im Kammerfilterkuchen enthaltenen silikatischen Verbindungen (Tonminerale) als Wasserspeicher. Ferner wird die Nährstoffbindung in diesem aktivierten Boden signifikant verbessert, so dass durch das geförderte Bodenleben die Mikrobiologie im Boden zunimmt und die Durchwurzelbarkeit des Bodens erheblich steigt. In der Folge verbessert sich das Mikroklima im Bereich der Ackerfläche und ein Mineraldüngereinsatz kann stark reduziert oder völlig vermieden werden.

Bevorzugt können die biologischen Bestandteile als Hauptbestandteile des Komposts und der Kammerfilterkuchen im gewünschten Mischungsverhältnis in einen Miststreuer eingegeben werden und von diesem auf einer befestigten Fläche, bevorzugt Betonboden ggf. mit Entwässerungsgefälle und Rinnen zum Sammeln austretender Flüssigkeit, in einer Mächtigkeit von 0,5 bis 2,5 Meter verteilt werden. Dabei kann durch das Überfahren des abgelegten, gemischten Komposts bereits eine geringe Verdichtung ausgeführt werden. Besonders bevorzugt wird der Kompost in einer Höhenmächtigkeit von 1 bis 2 Meter auf der befestigten Fläche aufgebracht.

Wenn als biologische Bestandteile Feststoffanteile von separierter Gülle enthalten sind, wobei der Massenanteil der separierten Gülle am Kompost mindestens 60 % beträgt, können in Regionen mit hoher Viehdichte in der Landwirtschaft entsprechend große Güllemengen im Boden verarbeitet werden, ohne dass eine Gefährdung des Grundwassers durch Nitratbelastung entstehen kann. Dabei wird zunächst für den Kompost lediglich der Feststoffanteil von separierter Gülle als biologischer Bestandteil verwendet. Dieser Feststoffanteil kann ideal in dem Kompost als biologischer Bestandteil verarbeitet werden. Gülle entsteht bei der Nutztierhaltung und besteht hauptsächlich aus Urin und Kot der landwirtschaftlichen Nutztiere. Dabei kann es sich um Gülle von Rindern, Schweinen, Geflügel und dergleichen handeln. Insbesondere in Regionen mit hoher Viehdichte fallen entsprechend hohe Güllemengen an, die der Landwirt loswerden muss. Dabei ist zu berücksichtigen, dass der Transport von Gülle teuer ist und sich deshalb die Separation von Gülle in Feststoffe und den flüssigen Anteil lohnt, obwohl die Separation ein gesonderter Arbeitsgang ist und entsprechend kosten- und wartungsaufwendig ist.

Bei der bekannten Ausbringung von nicht separierter Gülle mittels sogenannter Schleppschuhverteiler wird die Gülle streifenartig im Abstand von ca. 25 cm auf der landwirtschaftlichen Nutzfläche bodennah ausgebracht. Auf Ackerflächen kann die Gülle dann zwar eingearbeitet werden, dies ist jedoch nicht auf Grünlandflächen möglich, auf denen der dünnflüssige Anteil der Gülle in den Boden sickert, während die festen Bestandteile auf dem Grünland liegen bleiben und nur langsam über den Eintrag von Regenwasser in den Boden gelangen. Dadurch kommt es häufig bei der Grasernte dazu, dass noch vorhandene Güllereste unerwünscht in das frische Futter gelangen. Dadurch leidet die Futterqualität und es kann durch Keime und Pilze zu einer Beeinträchtigung der Tiergesundheit kommen, wenn die Tiere dieses so verunreinigte Futter aufnehmen. Abhilfe schaffen kann die Separation der Gülle in Feststoffe und den dünnflüssigen Teil der Gülle. Dieser dünnflüssige Teil der Gülle kann vor allem auf Grünflächen optimal zur Düngung eingesetzt werden. Feststoffe gelangen nicht auf die Flächen und können Futter nicht verunreinigen. Die Feststoffe bieten Vorteile in der Lagerung und dem Transport.

Optional sind als weitere biologische Bestandteile Gärreste, Klärschlamm, Grüngutabfälle, Sägespäne und/oder Stallmist, insbesondere Kuhmist oder Pferdemist, vorgesehen sind, wobei der Massenanteil der weiteren biologischen Bestandteile an der Gesamtkompostmasse maximal 30 % beträgt. Somit kann der Hauptbestandteil des natürlichen Komposts neben der separierten Gülle zusätzlich weitere Bestandteile, nämlich Gärreste, Klärschlamm, Grüngutabfälle und/oder Stallmist, wie beispielsweise auch Hähnchenmist oder Hühnertrockenkot enthalten. Dabei ist ein hoher Ligninanteil für die Qualität des Komposts förderlich, allerdings verlängert sich die Reifezeit des Komposts. Für den Kompostierungsprozess wird Eiweiß benötigt, das in der Gülle, Mist und Grünabfällen enthalten ist, jedoch nicht in Sägespänen. Diese Sägespäne enthalten jedoch viel Lignin, was im Rotteprozess Huminsäuren entstehen lässt. Insgesamt sollte zur Erzielung der gewünschten Eigenschaften des Komposts, ein Masseanteil der separierten Gülle (Feststoffanteile) von 60 % an der Gesamtkompostmasse nicht unterschritten werden. Je höher der Masseanteil im Hauptbestandteil separierte Gülle ist, je schneller läuft der Rotteprozess ab, beispielsweise innerhalb von 4 bis 8 Wochen oder bei einem höheren Anteil von Grüngutabfällen, Sägespänen etc. eher 3 bis 6 Monate oder auch 1 Jahr und länger.

Dadurch, dass der Massenanteil des Hauptbestandteils 60 % bis 90 %, bevorzugt ca. 80 %, und der Massenanteil des Kammerfilterkuchens 10 % bis 40 %, bevorzugt ca. 20 %, beträgt, wird eine ideale Kompostzusammensetzung angegeben, bei der ein relativ rascher Rotteprozess, auch unterstützt durch den im Kammerfilterkuchen enthaltenen Anteil von CaO gefördert wird.

Dadurch, dass der Hauptbestandteil einen Massenanteil an Trockensubstanz von 15 % bis 60 %, bevorzugt 20 % bis 30 %, und der Kammerfilterkuchen einen Massenanteil an Trockensubstanz von 60 % bis 90 %, bevorzugt ca. 80 %, haben, hat der Kompost einen Massenanteil an Trockensubstanz von 35 % bis 60 %, bevorzugt 40 % bis 50 %. Dieser so definierte Kompost zeigt aufgeschichtet ein Haufwerk mit ausreichender Durchlüftungsmöglichkeit, so dass im äußeren Drittel bzw. Hälfte dieses Haufwerks ausreichend Luft zirkulieren und dort ein aerober Rotteprozess ablaufen kann. Hingegen liegt in den tieferen Lagen des Haufwerks Sauerstoffreduzierung oder -ausschluss vor. Hier vermehren sich im Inneren anaerobe Bakterien, die die erwünschten Huminsäuren bilden. Wäre das Haufwerk zu feucht, würde ein zu großer Teil des Komposts unbelüftet, also unter Sauerstoffausschuss liegen. Insbesondere bei einer Trockensubstanz des fertig gemischten Komposts von 40 bis 50 % liegt eine optimale Balance zwischen aerober und anaerober Zersetzung im Kompost vor.

Bevorzugt sind die silikatischen Verbindungen aktive Tonminerale. Die Tonminerale haben durch ihre Eigenschaft, Kationen zu binden, die Fähigkeit der Bindung von Ammoniumstickstoff (NH₄₊) und Ammoniak (NH₃), was zu geringeren Ammoniakverlusten und einer besseren Nährstoffwirkung des auf dem Acker ausgebrachten Komposts führt. Somit sind die Tonminerale nicht nur hinsichtlich der Bindigkeit vorteilhaft, sondern verbessern die Wirkung des Feststoffanteils der separierten Gülle und somit die lang andauernde Fruchtbarkeit des Bodens. Aktive Tonminerale sind sog. Dreischicht-Tonminerale mit einer Tetraederschicht-Oktaederschicht-Tetraederschicht (TOT), z.B. Illit, Smectit und Vermiculit. Denn diese 2:1 Tonminerale besitzen eine höhere Kationenaustauschkapazität als Zweischicht-Tonminerale und können daher mehr Nährstoffe wie Kalium- oder Ammoniumionen an Pflanzen abgeben, während sie die von den Wurzeln abgegebenen Hydroniumionen an deren Stelle in ihrer Zwischenschicht einlagern. Ammoniakverluste (NH₃) können somit mit diesem Material reduziert werden.

Der Kammerfilterkuchen enthält in der Trockensubstanz 30 - 85 Gew. % Kalk, nämlich CaCO₃ (Kalkstein) und/oder CaMg(CO₃)₂ (Dolomit). Wird Dolomitgestein verarbeitet, enthält der Filterkuchen entsprechende Anteile Magnesium. Ergänzend zur Kalksteinkomponente oder ausschließlich kann der Kammerfilterkuchen somit auch Dolomitbestandteile aufweisen. Bevorzugt enthält der Kammerfilterkuchen in der Trockensubstanz 45 - 70 Gew. % Kalk.

Wenn der Kammerfilterkuchen als silikatische Verbindungen Zeolithe, insbesondere Klinoptilolithe enthält, wird die Bodenvitalität weiter gefördert. Klinoptilolithe können Toxine binden und somit Mikroorganismen und Regenwürmer im Boden schützen. Bevorzugt enthält der Kammerfilterkuchen in der Trockensubstanz 25 - 50 Gew. % Zeolithe.

Dadurch dass die Temperatur im Kompost kontrolliert und bei Überschreiten eines Grenzwertes von 45 bis 50 °C der Kompost gekühlt wird, wird verhindert, dass die Temperatur im Kompost während der Kompostierung auf mehr als 50 °C ansteigt. Die Überwachung erfolgt bevorzugt mittels in den Kompost eingeschobener Temperatursonden.

Wenn die Kühlung durch Umschichten des Kompostes und/oder durch Zugabe von Wasser, flüssiger Gülle oder aus dem Kompost austretender Flüssigkeit erfolgt, kann einerseits das Haufwerk durch das Umschichten neu strukturiert und vermischt und somit eine ggf. ausreichende Kühlung erreicht werden. Alternativ oder auch ergänzend kann auch durch Flüssigkeitszugabe, bevorzugt durch aus dem Kompost austretender Flüssigkeit, das Haufwerk heruntergekühlt werden. Die Komposttemperatur sollte nicht mehr als 50 °C betragen, damit die im Kompostierungsprozess erzeugten Huminsäuren nicht verbrennen. Im Normalfall ist ein Umschichten des Materials während der Kompostphase (Rotteprozess) nicht erforderlich. Ein Umschichten ist jedoch dann nötig, wenn die Temperatur des Kompost 50 °C übersteigt und folglich gekühlt werden muss. Je nach feuchte des Haufwerks kann auch Flüssigkeit verteilt werden. Zudem wird durch das Umschichten dieser Kühlflüssigkeit schneller im Haufwerk verteilt. Nach dem Umschichten kann die Oberfläche des Haufwerks wieder leicht angedrückt werden, was beispielsweise mit einem Frontlader oder Bagger oder durch ein Überfahren mit einem leichten Schlepper ausgeführt werden kann.

Wenn der Kompost für die Rottezeit von 4 Wochen bis 6 Monate, insbesondere 8 Wochen bis 3 Monate reift und nachfolgend auf einem zu düngenden Boden ausgebracht wird, wird der fertige Kompost in einem idealen Zustand auf dem zu düngenden Boden verteilt, um dort eine nachhaltige Bodenverbesserung zu bewirken. Bevorzugt wird der fertige Kompost mit einem Miststreuer gleichmäßig auf den zu düngenden Boden in einer Menge von 10 bis 20 t/ha ausgebracht.

Nachfolgend wird ein Ausführungsbeispiel der Erfindung ausführlich beschrieben.

Der herzustellende natürliche Kompost wird auf einer befestigten Fläche, bevorzugt einer betonierten Bodenplatte aufgeschichtet. Dabei können auch vorhandene Bauten für Fahrsilos mit einer Bodenplatte und zumindest zwei, meist parallel zueinander beabstandet angeordneten Seitenwänden verwendet werden. Derartige Fahrsilos, häufig auch Flachsilos genannt, dienen häufig zur Erstellung und Lagerung von Futtersilage. Bevorzugt ist die Betonplatte des Fahrsilos in einem geringfügigen Gefälle angeordnet und/oder mit Sammelrinnen für überschüssige Flüssigkeit ausgestattet. Dabei sollten die Sammelrinnen bzw. das Gefälle zu einem Sammelbehälter/-sumpf führen, von dem bedarfsweise Flüssigkeit abgepumpt werden kann.

Das gewünschte Massenverhältnis von ca. 80 % der biologischen Bestandteile in Form der Feststoffanteile von separierter Gülle zu ca. 20 % Kammerfilterkuchen wird beispielsweise auf dem landwirtschaftlichen Betrieb durch entsprechendes Befüllen eines herkömmlichen Miststreuers mit vier Radladerschaufeln aus Feststoffanteilen von separierter Gülle und einer Schaufel des Radladers mit Kammerfilterkuchen erreicht. Nachfolgend werden die Bestandteile mit dem Miststreuer durch die mit Scharen besetzten, drehenden Wellen intensiv vermischt und gleichmäßig auf der Bodenplatte des Fahrsilos ausgeworfen. Damit wird schichtweise ein Haufwerk aus den biologischen Bestandteilen und dem Kammerfilterkuchen in gut durchmischter Weise in dem Fahrsilo abgelegt und verdichtet sich durch sein Eigengewicht selbst. Gegebenenfalls kann es insbesondere bei einem höheren Anteil von Grünabfällen vorteilhaft sein, das Haufwerk durch das Überfahren mit dem Schlepper und dem angehängten Miststreuer ergänzend zu verdichten. Die Seitenwände des Fahrsilos begrenzen dabei die Lagerfläche zur Seite. Insgesamt sollte das so ausgebrachte Haufwerk des frischen Komposts eine Mächtigkeit von wenigstens 50 cm aufweisen. Bei neu angelegtem Kompost kann bei nicht ausreichender Materialmenge zunächst nur eine Teilfläche des Fahrsilos belegt werden, um möglichst rasch die Mindestmächtigkeit von 50 cm zu erreichen. Andererseits sollte bei starker Frequentierung des Fahrsilos eine Mächtigkeit von 2 ½ m bzw. maximal 3 m nicht überschritten werden, da anderenfalls der so aufgeschichtete Kompost zu stark komprimiert wird und folglich über einen zu großen Mächtigkeitsbereich nicht mehr durchlüftet ist. Bevorzugt sollte die Mächtigkeit des Haufwerks zwischen 1 m bis 2 m liegen. Bei Versuchen konnte festgestellt werden, dass bei dieser Mächtigkeit zwar im unteren Bereich des Haufwerks anaerobe Bedingungen herrschen, jedoch für den äußeren Randbereich von ca. 30 cm bis 80 cm eine ausreichende Durchlüftung herrscht, also aerobe Prozesse ablaufen können. Dabei konnte auch festgestellt werden, dass die Temperatur in diesem Kompost-Haufwerk kaum über 45 °C bis 50 °C steigt.

Dies ist wichtig, da die im nicht oder kaum durchlüfteten Kern bzw. unteren Bereich des Kompost-Haufwerks liegenden Bereiche durch anaerobe Bakterien bearbeitet werden, die dabei Huminsäuren bilden. Bei einer höheren Temperatur oberhalb 50 °C würden die Bakterien absterben und keine Huminsäure bilden. Ferner können weitere biologische Bestandteile der separierten Gülle zugemischt werden, jedoch möglichst nicht mehr als 20 % bezogen auf die Gesamtmasse der Kompost-Mischung. Diese weiteren biologischen Bestandteile sind beispielsweise Gärreste, Klärschlamm, Grüngutabfälle, Sägespäne und/oder Stallmist. Dabei ist insbesondere das Zuführen von weiteren biologischen Bestandteilen mit hohen Ligningehalt, also beispielsweise Sägespäne und/oder Grüngutabfälle vorteilhaft, da beim anaeroben Rotteprozess ein besonders hoher Anteil von Huminsäuren durch abgebautes pflanzliches Lignin und Zellulose entsteht.

Andererseits ist zu berücksichtigen, dass bei zu hohem Gehalt von derartigen ligninhaltigen Bestandteilen, insbesondere bei über 20 % Massenanteil an der Gesamtkompostmischung, die Reife-/oder Rottezeit sich deutlich verlängert. Dabei ist herauszustellen, dass gerade ein hoher Anteil von Huminsäuren in Verbindung mit dem im Kammerfilterkuchen enthaltenen Tonmineralen zu einem hohen Nährstoffgehalt führt, da die Huminsäuren zusätzlich Nährstoffe aus dem umgebenden Boden Pflanzen verfügbar machen und in Verbindung mit den Tonmineralien in der oberen Bodenschicht (Humusschicht) langfristig binden. Ferner wirken die Tonminerale als Wasserspeicher. Zeolith als Tonmineral speichert beispielweise die 40-fache Menge des Eigengewichts an Wasser. Nach einer entsprechenden Reifezeit von 4 Wochen bis 6 Monaten, insbesondere 8 Wochen bis 3 Monaten, kann dann das im Fahrsilo angelegte Haufwerk als fertiger Kompost auf den Ackerflächen ausgebracht werden. Hierfür eignet sich ein herkömmlicher Kompoststreuer mit einem Breitstreuwerk bestens, der den darin eingeladenen Kompost nochmals vermischt und gleichmäßig auf die Ackerfläche ausbringt. Solche Kompoststreuer sind in der Regel sogar mit eingebauten Waagen ausgestattet, so dass die Dosierung des auszubringenden Materials und auch die immer wichtiger werdende Nachweisführung gegenüber dem Gesetzgeber über ausgebrachte Nährstoffmengen mit hoher Genauigkeit erfolgen kann. Mit dem Kompoststreuer mit Breitstreuwerk ist es eben auch möglich, in bestehende Kulturen einzufahren und Kompost auszubringen, wenn Fahrwege in den Kulturen angelegt wurden. Das hat eben viele Vorteile, wenn der Kompost in den wachsenden Bestand ausgebracht wird für die Wasserspeicherung, Nährstoffbereitstellung/Pflanzenverfügbarkeit usw.

Während des Reifeprozesses wird die Temperatur im Kompost durch darin eingesteckte Temperatursensoren überwacht. Sollte ausnahmsweise eine Temperatur von oberhalb 50 °C auftreten, kann der Rotteprozess durch Umschichten des Haufwerks und dabei entsprechender Belüftung unterbrochen werden, sodass die Temperatur wieder sinkt. Alternativ oder ergänzend kann auch Flüssigkeit, beispielsweise Wasser oder die auf der Bodenplatte durchgesickerte und im Sammelbehälter/-sumpf gesammelte Flüssigkeit oder auch der flüssige Anteil der separierten Gülle, auf dem Kompost-Haufwerk ausgebracht, bevorzugt versprüht werden. Dabei ist darauf zu achten, dass der Massenanteil an Trockensubstanz im Kompost bei 35 % bis 60 %, bevorzugt 40 % bis 50 % liegt, also höchstens 50 bis 60 % Flüssigkeit im Kompost enthalten ist.

Bei Versuchen konnte ermittelt werden, dass bereits bei einer Kompostmenge von ca. 10 Tonnen pro Hektar und Jahr eine Humusneubildung am Boden nachweisbar ist. Bei besonders mageren und ausgelaugten Böden können auch bis zu 20 Tonnen pro Hektar und Jahr erforderlich sein. Dabei wirkt sich die rasche Bildung von neuem Humus positiv auf die Speicherfähigkeit nicht nur von Wasser und Nährstoffen, sondern auch von CO₂ im Boden aus. Entsprechend steigt der Wert des Bodens (Bodenpunktzahl). Gegebenenfalls besteht auch die Möglichkeit, die höhere Speicherfähigkeit von CO₂ durch Verkauf von CO₂-Zertifikaten in Ertrag umzuwandeln.

Weitere Vorteile bei Anwendung des Komposts auf Grünland oder für den Kartoffelanbau oder in Sonderkulturen sind folgende:
Gerade in Trockenperioden, wie beispielsweise 2018 in Deutschland, kommt es zu einer rasanten Erhöhung der Mäusepopulation. Bei entsprechend der aktuellen gesetzlichen Bestimmungen per Schleppschuh auf Grünland ausgebrachter Gülle ergeben sich streifenartig im Abstand von jeweils 25 cm Ablagerungen der Feststoffe der Gülle, die nur langsam in den Boden eingetragen werden. So bilden sich Schutzzonen, die Schatten spenden. Das Gras unter den Güllestreifen wird nur einer geringen UV-Strahlung ausgesetzt und ist entsprechend zart und weich. Die Mäuse haben unter den Güllestreifen idealen Schutz vor Greifvögeln. Bei der Grasernte gelangen neben den Gülleresten viele tote Mäuse (Tierkadaver) mit in das frische Futter. Das fördert die Entstehung von Butolismus. Die erfindungsgemäße Separierung der Gülle und Verarbeitung zu Kompost führt zu einer vollständigen Vermeidung dieser unerwünschten und gefährlichen Nachteile. Der Kompost ist rieselfähig, so dass eine homogene Verteilung und keine streifenförmige Ablagerung erfolgt.

Der Kartoffelanbau strapaziert die Mikrobiologie im Boden stark, weil es sowohl bei der Anpflanzung als auch bei der Ernte der Kartoffeln zu einer Aussiebung des Bodens kommt. Die Kartoffeln wachsen also in einem sehr homogenen Boden, dessen Mikrobiologie durch die Bearbeitung regelmäßig massiv reduziert oder gar zerstört wird. Entsprechend muss Dünger eingesetzt werden, um den Ertrag zu fördern. Kartoffeln gehören heute aber zu den Produkten mit dem höchsten Ertragspotential für den Ackerbauern. Kartoffeln werden in der Regel beregnet. Dies ist gerade in Trockenperioden, wie sie aufgrund des Klimawandels immer häufiger auftreten, aufwändig und teuer. Zudem ist die Entnahme von Grundwasser gesetzlich beschränkt, beispielsweise auf 70 m³ /ha, um den Grundwasserspiegel nicht zu sehr absinken zu lassen. Ackerbauern, die Kartoffeln anbauen wollen, würden aufgrund der weiter oben beschriebenen Eigenschaften des erfindungsgemäßen Komposts ein signifikantes Verbesserungspotential für die Qualität des Ackerbodens bereitstehen. Gleiches gilt für Sonderkulturen wie z. B. Spargel oder Erdbeeren oder ähnliche Kulturen. Der Kompost könnte als Depot unter den Pflanzen angelegt werden und würde seine positiven Eigenschaften so über eine längere Zeit an die Pflanzen abgeben können. Der Kompost wirkt als nachhaltiger Dünger mit Langzeitwirkung.

## Patentansprüche

1. Herstellungsverfahren für natürlichen Kompost für die Bodendüngung aus biologischen Bestandteilen als Hauptbestandteil mit einem Massenanteil von 60 % bis 90 %, **gekennzeichnet durch** die Schritte:
- Vermischen des Hauptbestandteils mit Kammerfilterkuchen, wobei der Kammerfilterkuchen aus den abschlämmbaren Feinstbestandteilen bei einer Kalkstein- und/oder Dolomitsteinwäsche anfällt, nachdem diese abschlämmbaren Feinstbestandteile in einer Kammerfilterpresse oder einem Absetzbecken entwässert sind, wobei der Kammerfilterkuchen in der Trockensubstanz 10 - 70 % silikatische Verbindungen enthält; und
- Ablagern und Verrotten lassen des frisch vermischten Kompostes für eine Rottezeit.

2. Herstellungsverfahren nach Anspruch 1, **dadurch gekennzeichnet, dass** der Hauptbestandteil und der Kammerfilterkuchen in einem Massenverhältnis 60 % bis 90 %, bevorzugt ca. 80 % Hauptbestandteil und 10 % bis 40 %, bevorzugt ca. 20 % Kammerfilterkuchen in einem Miststreuer vermischt wird.

3. Herstellungsverfahren nach Anspruch 2, **dadurch gekennzeichnet, dass** der frische Kompost aus dem Miststreuer auf einer befestigten Fläche in einer Mächtigkeit von 0,5 bis 2,5 m, bevorzugt 1 bis 2 m in einem Haufwerk abgelagert wird.

4. Herstellungsverfahren nach einem der vorangehenden Ansprüche, **dadurch gekennzeichnet, dass** als biologische Bestandteile Feststoffanteile von separierter Gülle enthalten sind, wobei der Massenanteil der separierten Gülle am Kompost mindestens 60 % beträgt.

5. Herstellungsverfahren nach Anspruch 4, **dadurch gekennzeichnet, dass** als weitere biologische Bestandteile Gährreste, Klärschlamm, Grüngutabfälle, Sägespäne und/oder Stallmist, insbesondere Kuhmist oder Pferdemist, vorgesehen sind, wobei der Massenanteil der weiteren biologischen Bestandteile maximal 30 % beträgt.

6. Herstellungsverfahren nach einem der vorangehenden Ansprüche, **dadurch gekennzeichnet, dass** der Massenanteil des Hauptbestandteils 60 % bis 90 %, bevorzugt ca. 80 %, und der Massenanteil des Kammerfilterkuchens 10 % bis 40 %, bevorzugt ca. 20 %, beträgt.

7. Herstellungsverfahren nach einem der vorangehenden Ansprüche, **dadurch gekennzeichnet, dass** der Hauptbestandteil einen Massenanteil an Trockensubstanz von 15 % bis 60 %, bevorzugt 20 % bis 30 %, und der Kammerfilterkuchen einen Massenanteil an Trockensubstanz von 60 % bis 90 %, bevorzugt ca. 80 %, haben.

8. Herstellungsverfahren nach einem der vorangehenden Ansprüche, **dadurch gekennzeichnet, dass** der Kompost einen Massenanteil an Trockensubstanz von 35 % bis 60 %, bevorzugt 40 % bis 50 %, hat.

9. Herstellungsverfahren nach einem der vorangehenden Ansprüche, **dadurch gekennzeichnet, dass** der Kammerfilterkuchen in der Trockensubstanz 15 - 60 Gew. % silikatische Verbindungen enthält, wobei die silikatischen Verbindungen aktive Tonminerale oder Zeolithe, insbesondere Klinoptilolithe, sind.

10. Herstellungsverfahren nach einem der vorangehenden Ansprüche, **dadurch gekennzeichnet, dass** der Kammerfilterkuchen in der Trockensubstanz einen Massenanteil von 30 - 85 %, insbesondere 45 - 70 % Kalk, nämlich CaCO₃ (Kalkstein) und/oder CaMg(CO₃)₂ (Dolomit), enthält.

11. Herstellungsverfahren nach einem der vorangehenden Ansprüche, **dadurch gekennzeichnet, dass** die Temperatur im Kompost kontrolliert und bei Überschreiten eines Grenzwertes von 45 bis 50 °C der Kompost gekühlt wird.

12. Herstellungsverfahren nach Anspruch 11, **dadurch gekennzeichnet, dass** die Kühlung durch Umschichten des Kompostes und/oder durch Zugabe von Wasser, flüssiger Gülle oder aus dem Kompost austretender Flüssigkeit erfolgt.

13. Herstellungsverfahren nach einem der vorangehenden Ansprüche, **dadurch gekennzeichnet, dass** der Kompost für die Rottezeit von 4 Wochen bis 6 Monate, insbesondere 8 Wochen bis 3 Monate reift und nachfolgend auf einem zu düngenden Boden ausgebracht wird.

14. Herstellungsverfahren nach Anspruch 13, **dadurch gekennzeichnet, dass** der fertige Kompost mit einem Miststreuer gleichmäßig auf zu düngenden Boden in einer Menge von 10 bis 20 t/ha ausgebracht wird.

## Claims

1. A production method for natural compost for soil fertilisation composed of biological constituents as the main constituent in a content by mass of 60% to 90%, **characterised by** the steps of:
- mixing the main constituent with chamber filter cake, said chamber filter cake being obtained from the elutriable super-fine constituents in a limestone and/or dolomite wash after said elutriable super-fine constituents have been dewatered in a chamber filter press or sedimentation tank, said chamber filter cake containing 10 - 70% siliceous compounds in the dry matter; and
- depositing the freshly mixed compost and leaving it to decompose for a decomposition period.

2. The production method according to claim 1, **characterised in that** the main constituent and the chamber filter cake are mixed in a manure spreader in a ratio by mass of 60% to 90%, preferably approx. 80%, main constituent and 10% to 40%, preferably approx. 20%, chamber filter cake.

3. The production method according to claim 2, **characterised in that** the fresh compost is deposited from the manure spreader on a paved surface in a pile in a thickness of 0.5 to 2.5 m, preferably 1 to 2 m.

4. The production method according to one of the preceding claims, **characterised in that** separated slurry solids are contained as the biological constituents, the content by mass of the separated slurry in the compost being at least 60%.

5. The production method according to claim 4, **characterised in that** fermentation residues, sewage sludge, green waste, sawdust and/or farmyard manure, in particular cattle manure or horse manure, are provided as further biological constituents, the content by mass of the further biological constituents being no more than 30%.

6. The production method according to one of the preceding claims, **characterised in that** the content by mass of the main constituent is 60% to 90%, preferably approx. 80%, and the content by mass of the chamber filter cake is 10% to 40%, preferably approx. 20%.

7. The production method according to one of the preceding claims, **characterised in that** the main constituent has a dry matter content by mass of 15% to 60%, preferably 20% to 30%, and the chamber filter cake has a dry matter content by mass of 60% to 90%, preferably approx. 80%.

8. The production method according to one of the preceding claims, **characterised in that** the compost has a dry matter content by mass of 35% to 60%, preferably 40% to 50%.

9. The production method according to one of the preceding claims, **characterised in that** the chamber filter cake contains 15 - 60 wt.% siliceous compounds in the dry matter, said siliceous compounds being active clay minerals or zeolites, in particular clinoptilolites.

10. The production method according to one of the preceding claims, **characterised in that** the chamber filter cake has a content by mass of 30 - 85%, in particular 45 - 70%, lime, namely CaCO₃ (limestone) and/or CaMg(CO₃)₂ (dolomite), in the dry matter.

11. The production method according to one of the preceding claims, **characterised in that** the temperature in the compost is controlled and, in the event that a limit value of 45 to 50°C is exceeded, the compost is cooled.

12. The production method according to claim 11, **characterised in that** the cooling takes place by rearranging the compost and/or by adding water, liquid slurry or liquid issuing from the compost.

13. The production method according to one of the preceding claims, **characterised in that** the compost matures for the decomposition period of 4 weeks to 6 months, in particular 8 weeks to 3 months, and is then applied on to soil to be fertilised.

14. The production method according to claim 13, **characterised in that** the finished compost is applied evenly with a manure spreader in a quantity of 10 to 20 t/ha on to soil to be fertilised.

## Revendications

1. Procédé de fabrication de compost naturel pour la fertilisation des sols à partir de composants biologiques comme composant principal avec une fraction massique de 60 % à 90 %, **caractérisé par** les étapes consistant à
- mélanger le composant principal avec du tourteau de filtre-presse à plateaux chambrés, le tourteau de filtre-presse à plateaux chambrés étant obtenu à partir des plus fines particules pouvant être débourbées lors d'un lavage de pierre à chaux et/ou de pierre dolomitique, après que ces plus fines particules pouvant être débourbées ont été égouttées dans un filtre-presse à plateaux chambrés ou dans un bassin de décantation, le tourteau de filtre-presse à plateaux chambrés contenant 10-70% de composés de silicate dans la matière sèche ; et
- stocker et laisser murir le compost fraîchement mélangé pendant une période de maturation.

2. Procédé de fabrication selon la revendication 1, **caractérisé en ce que** le composant principal et le tourteau de filtre-presse à plateaux chambrés sont mélangés dans un épandeur de fumier dans un rapport massique de 60 % à 90 %, de préférence d'environ 80 % de composant principal et de 10 % à 40 %, de préférence d'environ 20 % de tourteau de filtre-presse à plateaux chambrés.

3. Procédé de fabrication selon la revendication 2, **caractérisé en ce que** le compost frais provenant de l'épandeur de fumier est déposé en tas sur une surface solide sur une épaisseur comprise entre 0,5 et 2,5 m, de préférence entre 1 et 2 m.

4. Procédé de fabrication selon l'une des revendications précédentes, **caractérisé en ce que** des fractions solides de lisier séparé sont contenues dans les constituants biologiques, la fraction massique de lisier séparé dans le compost étant d'au moins 60 %.

5. Procédé de fabrication selon la revendication 4, **caractérisé en ce qu'**il est prévu comme autres constituants biologiques des restes de fermentation, des boues d'épuration, des déchets verts, de la sciure et/ou du fumier d'étable, en particulier du fumier de vache ou du fumier de cheval, la fraction massique des autres constituants biologiques s'élevant au maximum à 30%.

6. Procédé de fabrication selon l'une des revendications précédentes, **caractérisé en ce que** la fraction massique du composant principal est comprise entre 60 % et 90 %, de préférence d'environ 80 %, et la fraction massique du tourteau de filtre-presse à plateaux chambrés est comprise entre 10 % à 40 %, de préférence d'environ 20 %.

7. Procédé de fabrication selon l'une des revendications précédentes, **caractérisé en ce que** le composant principal présente une fraction massique de matière sèche comprise entre 15 % et 60 %, de préférence comprise entre 20 % et 30 %, et le tourteau de filtre-presse à plateaux chambrés présente une fraction massique de matière sèche comprise entre 60 % et 90 %, de préférence d'environ 80 %.

8. Procédé de fabrication selon l'une des revendications précédentes, **caractérisé en ce que** le compost présente une fraction massique de matière sèche comprise entre 35 % et 60 %, de préférence entre 40 % et 50 %.

9. Procédé de fabrication selon l'une des revendications précédentes, **caractérisé en ce que** le tourteau de filtre-presse à plateaux chambrés contient dans la matière sèche 15 à 60 % en poids de composés silicatés, les composés silicatés étant des minéraux argileux actifs ou des zéolites, notamment des clinoptilolites.

10. Procédé de fabrication selon l'une des revendications précédentes, **caractérisé en ce que** le tourteau de filtre-presse à plateaux chambrés contient dans la matière sèche une fraction massique de chaux, à savoir CaCO₃ (pierre à chaux) et/ou CaMg(CO₃)₂ (dolomite), comprise entre 30 et 85 %, en particulier entre 45 et 70 %.

11. Procédé de fabrication selon l'une des revendications précédentes, **caractérisé en ce que** la température dans le compost est contrôlée et, en cas de dépassement d'une valeur limite comprise entre 45 et 50 °C, le compost est refroidi.

12. Procédé de fabrication selon la revendication 11, **caractérisé en ce que** le refroidissement est effectué par redistribution du compost et/ou par ajout d'eau, de lisier liquide ou de liquide s'échappant du compost.

13. Procédé de fabrication selon l'une des revendications précédentes, **caractérisé en ce que** le compost est mis à murir pendant le temps de maturation comprise entre 4 semaines et 6 mois, en particulier entre 8 semaines et 3 mois, et est ensuite épandu sur un sol à fertiliser.

14. Procédé de fabrication selon la revendication 13, **caractérisé en ce que** le compost fini est épandu uniformément avec un épandeur à fumier sur le sol à fertiliser dans une quantité comprise entre 10 et 20 t/ha.
